# DEMANDE DE BREVET EUROPEEN

(11) **EP 1 035 721 A1**
(43) Date de publication de la demande: **13.09.2000**
(21) Numéro de dépôt: 99402959.3
(22) Date de dépôt: 26.11.1999
(51) Int. Cl.: H04M 11/04

(54) **Interface de télécommande pour poste téléphonique, permettant de transmettre une alarme et poste téléphonique comprenant ladite interface**

(30) Priorité: 27.11.1998 FR 9814993
(71) Demandeur: FRANCE TELECOM, 75015 Paris (FR)
(72) Inventeur: Hillereau, Bertrand, 94230 Cachan (FR)
(74) Mandataire: Ballot, Paul

(57) **Abrégé**

L'invention concerne une interface de télécommande pour poste téléphonique, qui permet de faire fonctionner celui-ci de manière à transmettre automatiquement une alarme.

Elle consiste à prévoir des moyens (101-104) pour détecter une coupure secteur réelle ou forcée, ces moyens permettant de commander un relais (106) qui est réuni aux circuits de la touche de mémoire directe et de la pédale de raccrochage d'un poste téléphonique connu. En basculant, le relais provoque la numérotation puis l'émission d'un signal codé. Après une durée temporisée (105), le circuit rebascule en provoquant le raccrochage.

Elle permet, en utilisant un tel poste connu, de minimiser le matériel contenu dans l'interface proprement dite.

## Description

La présente invention se rapporte aux interfaces qui permettent de télécommander un poste téléphonique afin de transmettre une alarme provenant d'un capteur quelconque à un poste éloigné en passant de préférence par le réseau commuté public.

Elle s'applique à tout appareil ou terminal de télécommunication ayant les fonctions d'un poste téléphoniques (à savoir prise de ligne, numérotation, raccrochage). C'est pourquoi dans toute la suite on parlera pour simplifier de poste téléphonique.

L'invention s'applique tout particulièrement aux postes téléphoniques connus sous la dénomination commerciale " AMARYS 220 ", qui comprennent d'origine des dispositifs pouvant être reliés à cette interface avec un minimum de modifications.

On connaît des dispositifs spécialisés qui peuvent être branchés sur une ligne téléphonique afin, en réaction à une alarme provenant d'un ou plusieurs capteurs, de transmettre à un poste éloigné, par exemple à un centrale de télésurveillance, une indication de la survenue de cette alarme.

Ces dispositifs comprennent des moyens permettant de simuler toutes les fonctions décrochage, raccrochage et numérotation d'un poste téléphonique ordinaire manipulé par un opérateur. Ces moyens permettent ainsi de décrocher, de numéroter, de transmettre l'alarme et finalement de raccrocher.

Les dispositifs en question sont en outre pourvus d'un grand nombre de sécurités permettant de les protéger contre des interventions malveillantes visant à les empêcher de fonctionner.

Ces dispositifs fonctionnent bien en général mais ils sont complexes et coûteux, ceci d'autant plus qu'ils ne sont généralement fabriqués qu'en petites quantités. Cette dernière caractéristique retentit non seulement sur le coût unitaire du dispositif mais encore sur l'amortissement des frais d'agrément rendus nécessaires parce que l'appareil doit pouvoir être relié directement à un réseau téléphonique publique.

L'invention vise à surmonter ces inconvénients en utilisant un poste téléphonique du commerce, de grande diffusion, et dont les organes permettent d'effectuer automatiquement les fonctions décrites ci-dessus. Ceci permet de limiter le dispositif à une interface très simple et très peu coûteuse. L'interface sera préférentiellement placée dans le poste téléphonique.

Pour cela l'invention propose une interface de télécommande pour poste téléphonique, permettant de transmettre une alarme, principalement caractérisée en ce qu'elle comprend des moyens de couplage au secteur, des moyens permettant de couper ce couplage sous la commande d'au moins un signal extérieur d'alarme, des moyens pour détecter cette coupure, et des moyens pour faire fonctionner sur un poste téléphonique muni d'une touche " de mémoire directe " les circuits de ce poste commandés par ladite touche.

Selon une autre caractéristique, les moyens de couplage au secteur sont constitués d'un photocoupleur permettant un très fort isolement galvanique.

Selon une autre caractéristique, les moyens permettant de couper ledit couplage sont constitués d'un premier relais connecté en série entre le secteur et les moyens de couplage et dont l'entrée de commande est connectée au circuit permettant d'appliquer ledit signal extérieur d'alarme.

Selon une autre caractéristique, les moyens de détection de coupure dudit couplage sont constitués d'un comparateur dont l'une des entrées est réunie aux dits moyens de couplage et dont l'autre entrée est réunie à une alimentation continue secourue.

Selon une autre caractéristique, les moyens pour faire fonctionner la touche de mémoire directe comprennent au moins un deuxième relais muni d'au moins un premier contact destiné à être connecté en parallèle sur au moins un autre premier contact situé dans le poste téléphonique et lui-même destiné à être commandé en usage normal par ladite touche de mémoire directe ; ce deuxième relais étant commandé à partir des moyens de détection de la coupure secteur.

Selon une autre caractéristique, l'interface comprend en outre un circuit de temporisation déclenché par les moyens pour détecter ladite coupure de secteur et permettant de faire fonctionner ledit deuxième relais pendant une durée déterminée et réglable.

Selon une autre caractéristique, ledit deuxième relais comprend en outre un deuxième contact destiné à être relié en parallèle sur un autre deuxième contact situé dans le poste téléphonique et lui-même destiné à être commandé en usage normal par la pédale de raccrochage du combiné du poste.

Selon une autre caractéristique, le deuxième relais comprend en outre un troisième contact destiné à être relié à un autre troisième contact situé dans le poste téléphonique, et lui-même destiné à être commandé en usage normal par la touche de mémoire directe simultanément avec l'autre premier contact.

L'interface est apte à recevoir plusieurs signaux d'alarme, elle comprend dans ce cas un dispositif permettant de différentier les différents signaux d'alarme.

Le dispositif comprend pour chaque signal d'alarme, un relais connecté aux sorties du premier relais commandant un dispositif à contact pour transmettre un signal à un circuit de traitement commun lequel est apte à émettre un message différencié selon l'origine de l'alarme.

Selon une autre caractéristique, l'interface comprend en outre un programmateur horaire permettant de faire fonctionner à des périodes précises le premier relais pour effectuer un auto-test de l'ensemble de l'installation.

Selon une autre caractéristique, l'interface est adaptée pour être reliée à un poste téléphonique du type connu " AMARYS 220 ".

D'autres particularités et avantages de l'invention apparaîtront clairement dans la description suivante, présentée à titre exemple non limitatif en regard des dessins annexés sur lesquels:
- la figure 1 représente le schéma d'une interface selon l'invention, limité aux organes essentiels à la compréhension et à la reproduction de celle-ci;
- la figure 2, représente le schéma d'un mode de réalisation particulier de l'invention,
- la figure 3, représente une variante de réalisation.

La description de l'invention sera faite en relation avec le poste connu dans le commerce sous le nom" AMARYS 220 ".

Ce poste, qui est très répandu et qui présente l'avantage d'être d'un prix extrêmement raisonnable, comporte une caractéristique très rare pour un appareil de cette catégorie, qui consiste en une touche dite " de mémoire directe ".

En effet, dans la plupart des cas les postes à mémoire peuvent mémoriser un certain nombre de numéros de téléphone pouvant être appelés automatiquement, mais cette fonction s'effectue le plus souvent par des appuis successifs sur au moins deux touches distinctes. L'une de ces touches appelle la fonction mémoire et l'autre, l'une de celles du clavier par exemple, appelle le numéro dans la mémoire sélectionnée par cette dernière touche.

Dans le cas du poste AMARYS 220, la touche dite " de mémoire directe " permet par un seul appui sur celle-ci d'appeler directement le numéro de téléphone souhaité, sans avoir à faire d'autres manoeuvres.

En outre, cette mémoire comporte 18 caractères, ce qui permet, après la numérotation automatique du correspondant à appeler, d'émettre ultérieurement, avec un délai permettant le décrochage du correspondant appelé et éventuellement la réception d'un message émis automatiquement, par exemple par un serveur vocal, une suite de chiffres permettant de déclencher différentes fonctions, par exemple, la transmission d'un message codé.

Celui-ci peut être par exemple un numéro de téléphone à rappeler, dans le cas où on a appelé un système de messagerie, tel que le système " TATOO " ou le système " TAMTAM ".

Bien entendu l'invention n'est pas limitée à l'usage du poste AMARYS 220 et elle s'étend à tous les postes ou terminaux comportant une touche de mémoire directe, bien qu'il n'en existe que peu de modèles actuellement.

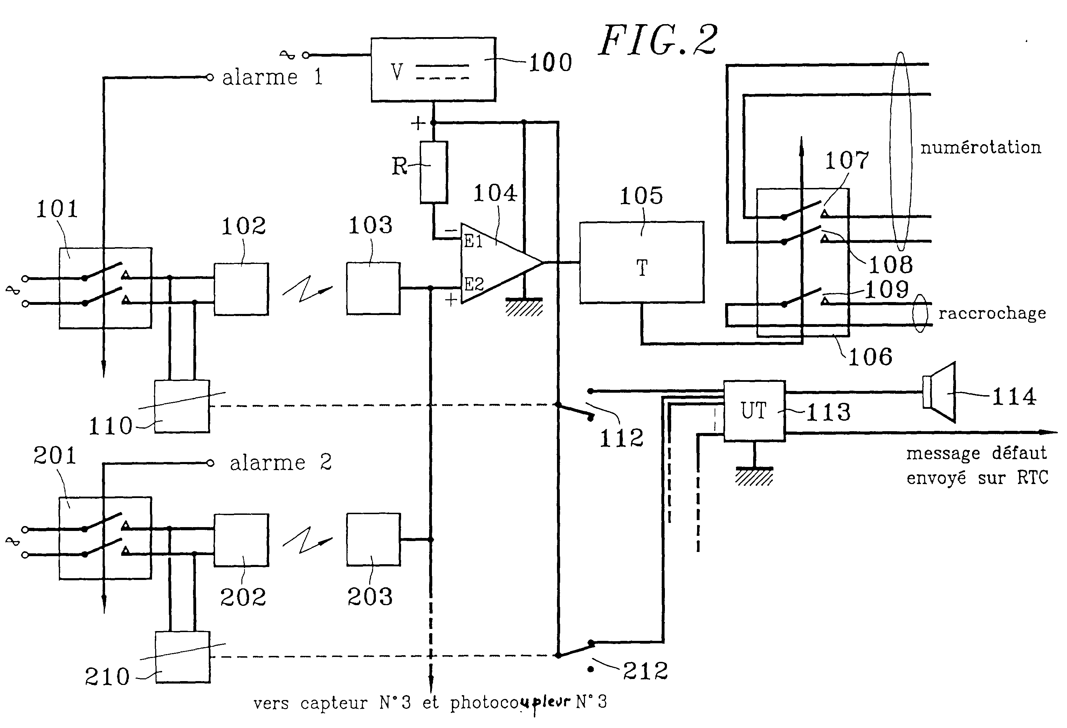

On parle d'interface de télécommande dans la mesure où cette dernière est à l'extérieur du poste téléphonique. Cependant, cette interface peut tout à fait être intégrée dans le poste, auquel cas on parlera plutôt d'interface de commande. Cependant dans ce cas le relais 106, dont la fonction sera explicitée à propos de la figure 2, sera dans le poste téléphonique. L'interface sera reliée électriquement à la commande de ce relais.

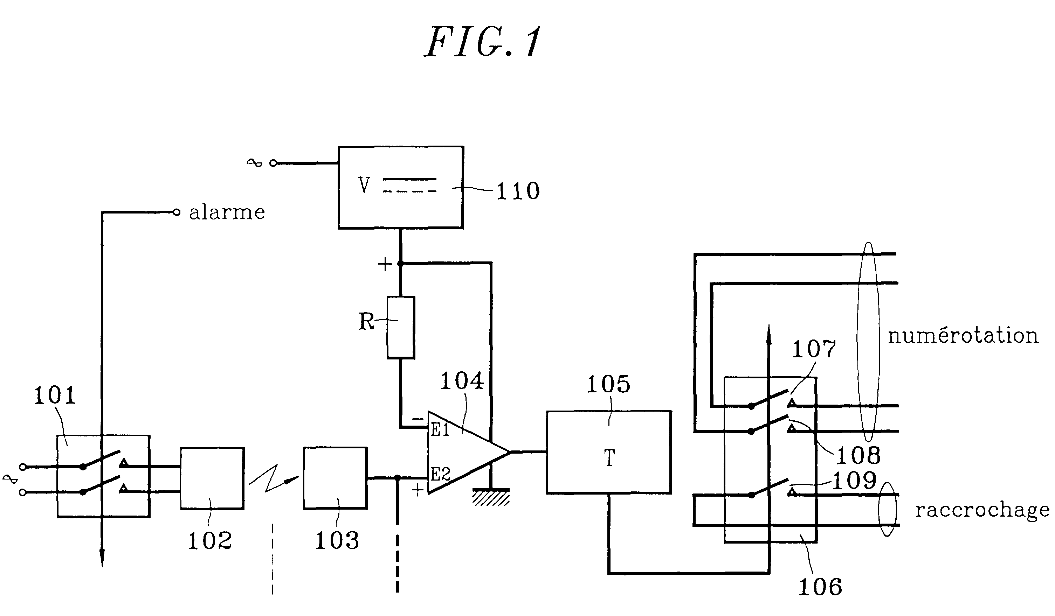

L'interface dont le schéma est représenté sur la figure1, comporte un relais d'alarme 101 connecté au secteur et qui permet de déclencher le fonctionnement de l'ensemble.

Ce déclenchement s'effectue à partir de la réception sur une prise d'entrée d'un signal d'alarme provenant d'un ou de plusieurs capteurs non représentés, qui peuvent être de natures très diverses, par exemple un radar de détection de présence d'intrus, un détecteur de bris de glace ou un contact d'ouverture de portes.

La réception de ce signal d'alarme, qui est appliqué sur l'entrée de commande du relais 101, provoque l'ouverture de ce relais, ce qui coupe l'alimentation secteur de l'interface.

Ce mode de fonctionnement permet d'obtenir également une fonction d'auto-surveillance de cette alimentation secteur. En effet si celle-ci vient à disparaître, que ce soit par la suite d'une panne ou par l'action d'un intrus qui coupe par exemple les fils d'alimentation, l'alarme se déclenche automatiquement de la même manière que quand elle provient de détecteurs tels que ceux décrits plus haut.

En action de veille, le secteur alimente, par l'intermédiaire du relais 101, un photocoupleur composé d'un émetteur lumineux 102 et d'un récepteur photoélectrique 103. Ce photocoupleur permet de protéger l'interface contre des risques de surtensions de toutes natures, volontaires ou involontaires, provenant du secteur, en assurant une isolation galvanique entre celui-ci et les organes de l'interface.

Dans le cas représenté, l'interface est alimentée à partir d'un réseau monophasé, mais il est tout à fait possible de l'alimenter à partir d'un réseau polyphasé, triphasé par exemple, en utilisant autant de relais d'alarme et de photocoupleurs que de phases du réseau, comme indiqué par des pointillés sur la figure et comme on peut le voir sur la figure 2.

Les sorties des photocoupleurs sont alors connectées en parallèle. Une telle extension permet également, dans le cas où l'on serait amené à exploiter les signaux provenant d'un grand nombre de détecteurs qui ne pourraient pas être tous branchés sur un seul relais, d'utiliser plusieurs relais alimentés en parallèle par le secteur et sur les connexions de commande desquels seraient répartis les signaux provenant des différents détecteurs.

Le signal de sortie du photodétecteur 103 est appliqué sur l'une des entrées, E1 par exemple, d'un comparateur 104. Le type de photocoupleur utilisé dans cet exemple de réalisation permet d'obtenir une tension de sortie continue variant selon la présence de courant ou non sous l'action du photocoupleur.

L'autre entrée, E2 par exemple, du comparateur 104 est raccordée à la sortie d'une source de tension continue stabilisée et secourue 100. De manière connue, cette alimentation comporte pour cela par exemple un accumulateur chargé à partir du secteur par un système de redressement, de préférence alimenté par un transformateur permettant là aussi une isolation galvanique par rapport au secteur. Compte tenu des puissances utilisées, on pourra également utiliser, pour maintenir la charge de cette batterie, un photocoupleur de capacité suffisante qui permettrait un isolement galvanique encore meilleur que celui procuré par un transformateur.

Cette alimentation 100 permet également d'alimenter, de manière classique et donc non représentés sur la figure, les différents organes électroniques constituant l'interface selon l'invention.

Lorsque l'alimentation du photocoupleur 102/103 est présente (fonctionnement normal) la tension appliquée sur E1 du comparateur 104 est nulle.

Lorsque l'alimentation du photocoupleur 102/103 est coupée (présence d'un défaut), de l'une des façons vues plus haut, la tension appliquée à l'entrée E1 du comparateur 104 est non nulle. La sortie de ce comparateur bascule alors et vient déclencher un système de temporisation 105. Le comparateur 104 est câblé, de manière connue, pour basculer de façon franche seulement lorsque la différence des tensions sur ses entrées prend une valeur suffisante pendant un temps suffisamment long pour ne pas interpréter comme des signaux d'alarme des variations fugitives et parasites de tensions.

Le système de temporisation 105 peut être réalisé de toutes manières connues, mais on utilisera de préférence un dispositif fonctionnant de manière numérique, par comptage par exemple, afin de pouvoir régler de manière facile sur un grand intervalle de temps la durée de temporisation souhaitée, à l'aide d'un dispositif simple, tel que par exemple un potentiomètre non représenté.

Dans ces conditions, au déclenchement d'une alarme le circuit de temporisation 105 émet sur sa sortie un signal de commande qui dure un temps déterminé suffisant pour commander les actions qui vont être décrites ci-après. Au bout de la durée fixée par le réglage de ce circuit de temporisation, ce signal retombe en déclenchant l'action finale qui termine la suite des opérations de transmission de l'alarme.

La sortie du circuit de temporisation 105 est raccordée à l'entrée de commande d'un relais 106, qui comporte deux contacts ouverts au repos 107, 108 et un contact fermé au repos 109.

Le cas échéant, ce relais 106 est formé de plusieurs relais distincts, dont les entrées de commande sont reliées en parallèle sur la sortie du circuit 105.

Ces différents contacts 107, 108, 109 sont reliés par des fils de connexion au poste téléphonique, de type AMARYS 220 dans cet exemple de réalisation, utilisé pour transmettre l'alarme.

Dans le cas où l'interface sera à l'extérieur du poste téléphonique, ces fils sont de préférence réunis en un cordon terminé par une prise mâle, de type RJ45 par exemple. Ceci permet de raccorder ce cordon au poste téléphonique par l'intermédiaire d'une prise femelle de type RJ45 intégrée dans le poste téléphonique.

Dans le cas où l'interface est placée dans le poste téléphonique les fils seront remplacés par des pistes de circuit imprimé.

Quatre des bornes de connexion de cette prise femelle, correspondant à l'arrivée des quatre fils raccordés aux deux contacts 107/108 ouverts au repos, sont reliés aux quatre plots correspondant à la touche de mémoire directe du poste téléphonique.

On sait en effet que cette touche fonctionne par fermeture de deux circuits, obtenue en réunissant deux à deux ces quatre plots par l'intermédiaire de deux barres de contact actionnées par la touche de mémoire directe.

Les deux fils correspondant au contact 109 fermé en position repos sont quant à eux reliés, également par la prise RJ45, aux deux plots utiles correspondant à la pédale de décrochage actionnée par le combiné du poste téléphonique lorsque celui-ci est reposé sur le corps du poste téléphonique.

Dans la position raccrochée, cette pédale vient court-circuiter par l'intermédiaire d'une barre de contact les deux plots en question, et dans la position décrochée la pédale se relève, en ouvrant donc le circuit entre ces deux plots.

Cette description correspond au poste AMARYS 220 et bien entendu dans le cas d'un autre poste les contacts pourraient être ouverts ou fermés selon les besoins.

Ainsi donc, lorsque le signal de commande provenant du circuit de temporisation 105 devient actif, les contacts 107 et 108 se ferment et le contact 109 s'ouvre.

La fermeture des circuits reliés aux contacts 107 et 108 vient ainsi simuler pour le poste téléphonique l'action sur la touche de mémoire directe, ce qui provoque le décrochage du poste et l'envoi sur la ligne de la numérotation correspondant aux numéros mémorisés pour cette touche de mémoire directe.

Le récepteur correspondant au numéro ainsi appelé décroche et est averti de la transmission de l'alarme selon un code convenu. Ce code peut consister simplement par exemple par la détection de l'appel depuis le poste téléphonique. (par exemple la présentation du numéro appelant).

De manière plus sûre, on utilisera la transmission différée, comme vu plus haut, par ce poste téléphonique d'un certain nombre de codes correspondant à des numéros préalablement mémorisés à la suite dans la mémoire correspondant à la touche de mémoire directe.

A la fin de la durée correspondant au réglage du circuit de temporisation 105, le signal de commande retombe, ce qui provoque l'ouverture des contacts 107 et 108 et la fermeture du contact 109.

Dans ces conditions, la fermeture du circuit correspondant à la fermeture du contact 109 simule le raccrochage du combiné téléphonique et provoque la fin de la communication à partir du poste téléphonique.

La numérotation est renouvelée après une durée déterminée cycliquement jusqu'au raccrochage et/ ou à la limite de durée de vie de l'alimentation secourue.

Lors de l'émission du signal de commande par le circuit de temporisation 105, le décrochage est simulé par la fermeture des contacts 107 et 108, le contact 109 s'ouvre, mais cette ouverture est sans influence sur le fonctionnement.

A la retombée du contact 109 par contre, il y a bien simulation du raccrochage, ce qui provoque donc la fin de la communication, comme expliqué plus haut et l'ouverture de 107 et 108 est sans incidence.

A titre de perfectionnement, l'invention propose également d'utiliser un programmateur horaire qui permet à des intervalles réguliers de faire fonctionner le relais 101 en lui appliquant, en parallèle avec les autres circuits destinés à transmettre de véritables alarmes, une alarme simulée qui déclenchera le fonctionnement du poste téléphonique en transmetteur d'alarme.

On peut ainsi tester à intervalles réguliers le fonctionnement de toute la chaîne, pour effectuer un test automatique. Pour éviter toute confusion avec une alarme réelle, les instants de ces tests seront prévus à l'avance et communiqués à la centrale de surveillance, afin que celle-ci puisse différencier cette alarme de test d'une alarme effective.

Si une véritable alarme se produisait pendant ce test cela serait sans incidence car un cycle de numérotation recommence au bout d'une durée déterminée ( une minute par exemple) comme décrit précédemment.

A titre de perfectionnement, on peut prévoir d'arrêter à distance le cycle de numérotation, à partir d'un poste téléphonique distant et ce de manière connue. On provoque la fermeture relais 101 du capteur dès que l'on a reçu le signal d'alarme.

Il est bien clair que ce dispositif est auto-protégé contre toute coupure de l'alimentation secteur, mais on constate également qu'il est auto-protégé contre toute défaillance de l'alimentation secourue, sauf dans le cas très improbable où ces deux défaillances seraient simultanées.

Dans le cas où l'interface est à l'extérieur du poste téléphonique, la liaison entre le boîtier contenant tous les éléments de l'interface à part le relais 106, pourrait être coupée par une personne malveillante. Or même dans ce cas, il y aura une numérotation automatique pour signaler cette anomalie, car le relais 106 va basculer. Ce système permet donc une auto-protection contre cette anomalie.

En effet, si la tension aux bornes de l'alimentation secourue vient à baisser, le comparateur 104 basculera de la même manière qu'en cas de défaillance de l'alimentation secteur et ceci entraînera le fonctionnement du poste téléphonique en transmission d'alarme.

Les organes électroniques de l'interface selon l'invention seront alors alimentés par l'alimentation secourue, pendant une durée correspondant à la durée de décharge de ses accumulateurs.

La figure 2 représente un mode de réalisation particulier de l'invention.

Dans le cas de ce mode de réalisation, l'interface permet d'être reliée à plusieurs capteurs de surveillance et d'autre part de différencier le type de défaut ou de panne selon l'origine du signal d'alarme c'est à dire selon le capteur de provenance.

A cette fin, l'interface comporte autant de relais 101, 201 ; de photocoupleurs 102,103 ; 202,203 que de phase du réseau d'alimentation électrique.

En outre, l'interface comprend pour chaque signal d'alarme un relais suivit d'un dispositif à contact 112.

Ainsi, le relais 110 est connecté aux sorties du relais 101 piloté par le signal de l'alarme 1 (par exemple un capteur de température). Le signal de ce relais est transmis à une unité de traitement 113 au moyen du dispositif à contact 112. L'unité émet alors un message identifiant le signal d'alarme sur la ligne téléphonique. Ce message pourra être un message vocal préenregistré dans l'unité de traitement.

Le relais 210 est quant à lui relié aux sorties du relais 201 piloté par le signal d'alarme 2 (par exemple un capteur de pression). Le signal de ce relais est transmis à l'unité de traitement 113 au travers d'un dispositif à contact 212.

L'unité de traitement 113 est par exemple réalisée par un microprocesseur et ses mémoires associées, relié à un circuit de synthèse vocale pour l'émission de messages vocaux.

L'unité de traitement peut être réalisée par le microprocesseur du poste téléphonique, dans le cas où le poste comporte un tel microprocesseur, ou par un autre microprocesseur.

Un haut parleur 114 peut être prévu.

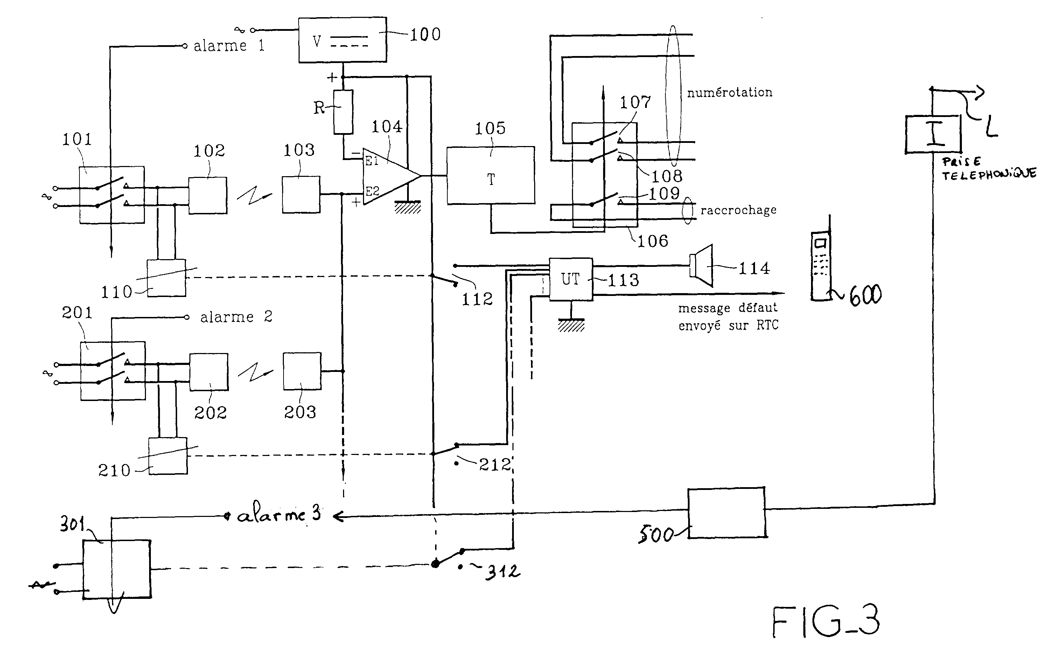

Une variante de réalisation va être décrite dans suite et illustrée par la figure 3. Cette variante reprend les éléments décrits et illustrés par la figure 2 en y incorporant des moyens permettant de s'affranchir d'une défaillance de la ligne téléphonique.

En effet, pour que l'interface reste opérante y compris dans le cas d'une coupure de ligne téléphonique L, il est prévu selon cette variante un détecteur de coupure 500 de ligne téléphonique fournissant le signal d'alarme 3. Ce signal d'alarme 3 est appliqué sur l'entrée de commande d'un relais 301, ce qui va provoquer l'ouverture de ce relais et par conséquent la coupure de l'alimentation secteur de l'interface comme décrit à propos des alarmes 1 et 2 (figure 2). Ceci va permettre, à travers le dispositif à contact 312 et l'unité de traitement 113, d'envoyer un message diffusé par le haut-parleur 114 vers un téléphone portable 600 placé à proximité et possédant un système de reconnaissance vocale. Ce message sera constitué d'un numéro de téléphone et/ou d'un nom à appeler. Ces derniers seront reconnus par le téléphone portable 600 qui effectuera alors un appel automatique.

## Revendications

1. Interface de télécommande ou de commande pour poste téléphonique, permettant de transmettre une alarme, caractérisée en ce qu'elle comprend des moyens (102, 103) de couplage au secteur, des moyens (101) permettant de couper ce couplage sous la commande d'au moins un signal extérieur d'alarme, des moyens (104) pour détecter cette coupure, et des moyens (105, 106) pour faire fonctionner sur un poste téléphonique muni d'une touche " de mémoire directe " les circuits de ce poste commandés habituellement par ladite touche, sous l'activation des moyens de détection de ladite coupure de couplage.

2. Interface selon la revendication 1, caractérisée en ce que les moyens de couplage au secteur sont constitués d'un photocoupleur (102, 103) permettant un très fort isolement galvanique.

3. Interface selon l'une quelconque des revendications 1 et 2, caractérisé en ce que les moyens permettant de couper ledit couplage sont constitués d'un premier relais (101) connecté en série entre le secteur et les moyens de couplage (102, 103) et dont l'entrée de commande est connectée au circuit permettant d'appliquer ledit signal extérieur d'alarme.

4. Interface selon l'une quelconque des revendications 1 à 3, caractérisée en ce que les moyens de détection de coupure dudit couplage sont constitués d'un comparateur (104) dont l'une des entrées est réunie aux dits moyens de couplage (102, 103) et dont l'autre entrée est réunie à une alimentation continue secourue (110).

5. Interface selon l'une quelconque de revendications 1 à 4, caractérisée en ce que les moyens pour faire fonctionner la touche de mémoire directe comprennent au moins un deuxième relais (106) muni d'au moins un premier contact (107) destiné à être connecté en parallèle sur au moins un autre premier contact situé dans le poste téléphonique et lui-même destiné à être commandé en usage normal par ladite touche de mémoire directe ; ce deuxième relais étant commandé à partir des moyens (104) de détection de la coupure secteur.

6. Interface selon la revendication 5, caractérisée en ce qu'elle comprend en outre un circuit de temporisation (105) déclenché par les moyens (104) pour détecter ladite coupure de secteur et permettant de faire fonctionner ledit deuxième relais (106) pendant une durée déterminée.

7. Interface selon l'une quelconque des revendications 5 et 6, caractérisée en ce que ledit deuxième relais (106) comprend en outre un deuxième contact (109) destiné à être relié en parallèle sur un autre deuxième contact situé dans le poste téléphonique et lui-même destiné à être commandé en usage normal par la pédale de raccrochage du combiné du poste.

8. Interface selon l'une quelconque des revendications 5 à 7, caractérisée en ce que le deuxième relais (106) comprend en outre un troisième contact (108) destiné à être relié à un autre troisième contact situé dans le poste téléphonique et lui-même destiné à être commandé en usage normal par la touche de mémoire directe simultanément avec l'autre premier contact.

9. Interface selon l'une quelconque des revendications 1 à 8 apte à recevoir plusieurs signaux d'alarme, caractérisée en ce qu'elle comprend en outre un dispositif (110, 112, 113) permettant de différentier les différents signaux d'alarme.

10. Interface selon les revendications 3 et 9, caractérisée en ce que le dispositif comprend pour chaque signal d'alarme, un relais (110) connecté aux sorties du premier relais (respectivement 101, 201), commandant un dispositif à contact (112, 210) pour transmettre un signal à un circuit de traitement commun (113) lequel est apte à émettre un message différencié selon l'origine de l'alarme.

11. Interface selon l'une quelconque des revendications 1 à 10, caractérisée en ce qu'elle comprend en outre un programmateur horaire permettant de faire fonctionner à des périodes précises le premier relais (101) pour effectuer un auto-test de l'ensemble de l'installation.

12. Interface selon l'une quelconque des revendications précédentes, caractérisée en qu'elle comporte un détecteur de défaillance de ligne téléphonique (500) et en ce que le poste téléphonique est couplé à un téléphone portable (600) comprenant un dispositif de reconnaissance vocale.

13. Interface selon l'une quelconque des revendications 1 à 12, caractérisée en ce qu'elle est adaptée pour être reliée à un poste téléphonique du type connu " AMARYS 220 ".

14. Interface selon l'une quelconque des revendications 1 à 13, caractérisée en ce qu'elle est placée à l'intérieur du poste téléphonique.

15. Poste téléphonique comprenant une interface selon l'une quelconque des revendications 1 à 13.
